# EUROPÄISCHE PATENTSCHRIFT

(11) **EP 4 059 592 B1**
(45) Veröffentlichungstag und Bekanntmachung des Hinweises auf die Patenterteilung: **10.09.2025**
(21) Anmeldenummer: 21162916.7
(22) Anmeldetag: 16.03.2021
(51) Int. Cl.: B01F 29/30, B01F 29/87, B01F 31/10, B01F 31/20, B01F 33/25, B01L 3/00, B02C 19/20, G01N 1/28

(54) **PROBENRÖHRCHEN UND VERFAHREN ZUM DISPERGIEREN UND HOMOGENISIEREN**
SAMPLE TUBE AND METHOD FOR DISPERSING AND HOMOGENIZING
ÉPROUVETTE ET PROCÉDÉ DE DISPERSION ET D'HOMOGÉNÉISATION

(43) Veröffentlichungstag der Anmeldung: 21.09.2022
(73) Patentinhaber: Swissmeca SA, 3213 Kleinbösingen (CH); Axon Lab AG, 5405 Baden-Dättwill (CH)
(72) Erfinder: Brülhart, André, 3213 Kleinbösingen (CH); Brülhart, Maxime, 3280 Murten (CH); Müller, Guido, 1715 Alterswil (CH)
(74) Vertreter: Keller Schneider Patent- und Markenanwälte AG

(56) Entgegenhaltungen:
- EP-A1- 1 975 593
- CN-A- 105 510 613
- CN-A- 108 554 271
- DE-A1- 102018 103 013
- JP-A- 2006 051 505
- JP-A- H11 148 890
- US-A1- 2014 016 431

## Beschreibung

### Technisches Gebiet

Die Erfindung betrifft ein Probenröhrchen sowie eine Kombination und ein Verfahren zum Dispergieren und Homogenisieren einer Probe, insbesondere einer im Probenröhrchen befindlichen Probe.

### Stand der Technik

Im Stand der Technik sind eine Vielzahl von Probenröhrchen sowie Vorrichtungen und Verfahren zum Dispergieren und Homogenisieren von Proben bekannt. Insbesondere im Laborbereich werden Homogenisatoren zum Aufschliessen von Zellen verwendet. Hierbei werden die aufzuschliessenden Proben in der Regel in Reagenzgläser oder Probenröhrchen überführt. Der Zellaufschluss kann durch den Eintrag mechanischer Energie erfolgen, wobei die Zellwände üblicherweise durch Scherkräfte zerstört werden.

Für den Eintrag von mechanischer Energie in die aufzuschliessenden Proben sind unterschiedliche Verfahren bekannt. Im Dounce-Verfahren wird beispielsweise ein I<olben in geringem Abstand zur Wandung des Probengefässes hin- und her bewegt. Zellen können jedoch auch unter Zugabe von Mahlkörpern, zum Beispiel Glasperlen und Schütteln der Probe auf einem Schüttler aufgeschlossen werden. Ferner kann mechanische Energie auch durch Ultraschall in Probenflüssigkeiten einbringen, um Zellen aufzuschliessen. Eine weitere Möglichkeit des Zellaufschlusses liegt darin, eine Probenflüssigkeit unter hohem Druck durch ein enges Ventil zu pressen (French-Press).

Die CH 710 352 (Franz Bucher) offenbart beispielsweise einen Einwegbehälter zum Mischen, Homogenisieren, Extrahieren, Fraktionieren oder Aufschlämmen von Probenmaterial mit einem zylindrischen Röhrchen und einer Abdeckung, die einen Deckel, einen Spiralzylinder sowie einen Stössel aufweist. Sowohl der Boden des Röhrchens wie auch der Stössel weisen radial angeordnete Reibrippen auf. Mittels eines Antriebs kann der Stössel in vertikaler Richtung innerhalb des Röhrchens verschoben und in Drehung versetzt werden, um Probenmaterial zu Homogenisieren.

Die US 8,162,247 (Biomedical Polymers Inc.) beschreibt ein modulares Mörsersystem zum Zerkleinern von Proben. Das Mörsersystem umfasst ein Röhrchen mit einer Bodenfläche, die eine erste Schleifoberfläche aufweist sowie mit einer umlaufenden Wandung, die einen Probenaufnahmeraum bildet. Ein modularer Mörseraufsatz weist einen Betätigungsschaft auf der an einem distalen Ende eine Aufnahme für unterschiedliche Mörserköpfe, die jeweils über eine zweite Schleifoberfläche verfügen, und an seinem proximalen Ende eine Haltevorrichtung aufweist. Der Betätigungsschaft ist durch einen Schraubdeckel geführt, mit welchem das Röhrchen verschlossen werden kann.

Die US 4,715,545 (Sage Products Inc.) bezieht sich auf ein System zum Zerkleinern von Gewebeproben oder ähnlich, wobei sowohl die Proben wie auch ein Bediener des Systems vor Kontamination geschützt sind. Eine Probe kann in das System eingebracht und in diesem transportiert wie auch zerkleinert werden. Das System umfasst ein Röhrchen mit einer geschlossenen Bodenfläche, die als Schleiffläche ausgebildet ist, sowie eine Mörservorrichtung, die in das Röhrchen eingeführt werden kann. Das Röhrchen kann mittels eines Schraubdeckels verschlossen werden. Vor dem Zerkleinern wird der Schraubdeckel entfernt und die Mörservorrichtung in das Röhrchen eingeführt. Um das Risiko einer Kontamination zu verringern, verfügt die Mörservorrichtung über eine Schutzhülle, die über das Röhrchen gestülpt werden kann.

Die JP 2006-051505 (Yasui Kikai KK) offenbart ein Probenröhrchen entsprechend dem Oberbegriff des Anspruchs 1. Sie offenbart eine Vorrichtung zum Zerkleinern vor Proben. Die Vorrichtung verfügt über einen zylindrischen Behälter mit einem halbkreisförmigen oder konischen Boden, einem abnehmbaren Deckel sowie einem im Behälter aufgenommenen zylindrischen Körper, der sich entlang der Längsachse des zylindrischen Behälters bewegen kann. Der zylindrische Körper weist ein Ende auf, welches im Wesentlichen komplementär zum Boden des Behälters geformt ist. Wenn der Behälter mit eingefüllter Probe einer wechselseitigen Vibration entlang der Längsachse ausgesetzt wird, beginnt der zylindrische Körper sich zu drehen und wird wiederholt auf die zwischen ihm und dem Boden des Behälters angeordnete Probe treffen, wobei diese zerkleinert wird.

Nachteilig an den meisten Verfahren ist jedoch, dass die ungenügende Reinigung der hierfür verwendeten Vorrichtungen zu Verschleppungen und Kontaminationen führen kann. Daher ist es von Vorteil, wenn für den Zellaufschluss bzw. für das Homogenisieren und Dispergieren Einwegmittel verwendet werden können.

### Darstellung der Erfindung

Aufgabe der Erfindung ist es, eine dem eingangs genannten technischen Gebiet zugehörendes Probenröhrchen zu schaffen, welches ein in sich geschlossenes System zum Dispergieren und Homogenisieren von Proben ohne die Gefahr von I<ontamination oder Verschleppung ermöglicht. Weiter ist die Aufgabe der Erfindung ein entsprechendes Verfahren für das Dispergieren oder Homogenisieren einer Probe zu schaffen.

Die Lösung der Aufgabe ist durch die Merkmale des Anspruchs 1 definiert. Gemäss der Erfindung weist das Probenröhrchen eine zylindrische Wandung sowie ein erstes Ende und ein zweites Ende auf. Das erste Ende des Probenröhrchens ist durch eine Bodenfläche verschlossen, so dass ein Aufnahmeraum mit einer Längsachse für eine Probe zwischen Bodenfläche und zylindrischen Wandung gebildet wird. Das zweite Ende weist einen lösbar mit diesem verbundenen Verschluss auf. Innerhalb des Aufnahmeraumes ist ein Gewichtselement aufgenommen, welches derart geformt und dimensioniert ist, dass sich das Gewichtselement nur um die Längsachse des Aufnahmeraumes frei in diesem drehen kann.

Gemäss dem erfindungsgemässen Verfahren entsprechend Anspruch 8 wird die Probe in den Aufnahmeraum eingebracht, so dass sich diese zwischen dem Gewichtselement und dem zweiten oder ersten Ende befindet. Anschliessend wird der Verschluss mit dem zweiten Ende verbunden und das Probenröhrchen derart gedreht, dass sich die Probe in Richtung der Schwerkraft unterhalb des Gewichtselements befindet. Schlussendlich wird das Probenröhrchen in eine Drehbewegung um die Längsachse des Aufnahmeraumes versetzt.

Durch dessen Trägheitsmoment wird das Gewichtselement relativ zum Aufnahmeraum sowie zu einer im Aufnahmeraum befindlichen Probe zeitlich verzögert in Drehung versetzt. Durch den dadurch entstehenden Geschwindigkeitsunterschied wirken auf die Probe, welche zwischen der Bodenfläche bzw. dem Verschluss und dem Gewichtselement angeordnet ist, Scherkräfte, welche die Probe dispergieren bzw. homogenisieren.

Das Probenröhrchen weist alle Elemente auf, um eine Probenflüssigkeit zu Dispergieren oder zu Homogenisieren, so dass durch die Verwendung des erfindungsgemässen Probenröhrchens ein Verschleppen oder eine I<ontamination der Probenflüssigkeit verhindert wird. Auch die zum Durchführen der Dispersion oder Homogenisierung nötige Zeit kann erheblich reduziert werden, da lediglich die Probe in das Probenröhrchen gefüllt werden muss und das Vorbereiten bzw. Reinigen von zusätzlichen Apparaturen erübrigt.

Eine im Aufnahmeraum befindliche Probe wird aufgrund der Reibung mit dem Verschluss bzw. der zylindrischen Wandung ebenfalls in Drehbewegung versetzt wenn sich das Probenröhrchen dreht, allerdings aufgrund der Trägheit zeitverzögert relativ zu diesem. Aufgrund der Reibung zwischen der Probe und dem Gewichtselement wird schlussendlich auch das Gewichtselement in Drehung versetzt, jedoch ebenfalls mit zeitlicher Verzögerung gegenüber der Probe. Durch diese zeitliche Verzögerung erfolgt die Drehbewegung des Probenröhrchens, der Probe sowie des Gewichtselements mit unterschiedlichen Geschwindigkeiten. Dadurch erfolgt ein I<rafteintrag, insbesondere in der Form von Scherkräften, auf die Probe.

Die zylindrische Wandung des Probenröhrchens besteht vorzugsweise aus einem Polymermaterial, insbesondere Polypropylen, Polystyrol oder Polyethylenterephtalat. Alternativ kann die Wandung Probenröhrchen jedoch auch aus Glas bestehen.

Die Bodenfläche des Probenröhrchens ist vorzugsweise flach ausgestaltet. Alternativ kann die Bodenfläche jedoch auch konvex gewölbt oder konusförmig ausgestaltet sein. Die Bodenfläche ist vorzugsweise einstückig mit der zylindrischen Wandung ausgestaltet und besteht weiter bevorzugt aus demselben Material.

Die zylindrische Wandung ist vorzugsweise durchsichtig. Alternativ kann die zylindrische Wandung jedoch auch opak sein, beispielsweise für das Dispergieren oder Homogenisieren von Proben, welche lichtempfindliche Substanzen enthalten. Ferner kann die zylindrische Wandung nur für Licht eines bestimmen Spektrums, beispielsweise UV-Licht undurchsichtig sein.

Die zylindrische Wandung weist vorzugsweise eine Graduierung oder Skalierung auf, welche das Ablesen des Füllstandes des Probenröhrchens ermöglicht. Zudem kann die zylindrische Wandung auf deren Aussenseite über eine Schreibfläche verfügen, mit welcher das Probenröhrchen angeschrieben werden kann.

Der Aufnahmeraum definiert ein Volumen zur Aufnahme einer Probe, insbesondere einer Probenflüssigkeit. Das Volumen des Aufnahmeraums beträgt vorzugsweise von 100 µl bis 500 ml, insbesondere von 1 ml bis 100 ml. Spezielle Ausführungsformen des Probenröhrchens können jedoch auch Aufnahmeräume mit einem kleineren oder grösseren Volumen aufweisen.

Der Durchmesser der zylindrischen Wandung beträgt vorzugsweise von 5 mm bis 50 mm. Die Länge des Probenröhrchens, das heisst dessen maximale Ausdehnung entlang der Längsachse beträgt ohne Verschluss vorzugsweise von 10 mm bis 250 mm. Das Probenröhrchen kann in speziellen Ausführungsformen in der Form eines Mikroreaktionsgefässes oder eines Zentrifugenröhrchens vorliegen.

Der Verschluss ist vorzugsweise ein Schraub- oder Schnappdeckel. Alternativ kann der Verschluss jedoch auch in der Form eines Stopfens, insbesondere aus Polyethylen ausgestaltet sein. Der Verschluss besteht vorzugsweise aus demselben Material wie die zylindrische Wandung. Alternativ kann der Verschluss jedoch auch aus einem anderen Material, insbesondere aus einem anderen Polymer bestehen. Mit dem Verschluss lässt sich vorzugsweise der Aufnahmeraum am zweiten Ende flüssigkeitsdicht verschliessen.

Der Verschluss ist lösbar mit dem zweiten Ende der zylindrischen Wandung verbunden, das heisst, dass sich der Verschluss werkzeug- und zerstörungsfrei mit dem zweiten Ende bzw. von diesem entfernen lässt. In bevorzugten Ausführungsformen ist der Verschluss über eine Lasche oder ähnlich mit der zylindrischen Wandung verbunden, so dass dieser im gelösten Zustand nicht verloren gehen kann.

Das Gewichtselement weist vorzugsweise eine Masse auf, die genug gross ist, um bei einer Bewegung desselben relativ zur zylindrischen Wandung genügend grosse Scherkräfte entstehen zu lassen, um eine Dispersion bzw. eine Homogenisierung, insbesondere einen Zellaufschluss einer im Aufnahmeraum befindlichen Probe zu ermöglichen. Die Masse des Gewichtselements beträgt vorzugsweise von 5 g bis 500 g.

Das Gewichtselement weist vorzugsweise einen runden Querschnitt auf, der einen geringfügig kleineren Durchmesser als der Durchmesser des Aufnahmeraumes aufweist, so dass sich dieses möglichst reibungsfrei innerhalb des Aufnahmeraumes um dessen Längsachse drehen kann. Der Unterschied der Durchmesser beträgt vorzugsweise weniger als 1 mm, insbesondere weniger als 0.5 mm, so dass nur möglichst wenig Flüssigkeit zwischen Gewichtselement und zylindrischer Wandung dringen kann, wenn im Aufnahmeraum eine Flüssigkeit aufgenommen ist.

Das Gewichtselement ist derart geformt, dass sich dieses nur um die Längsachse des Aufnahmeraumes drehen kann. Dadurch wird sichergestellt, dass eine besonders effiziente Dispersion und Homogenisierung einer im Aufnahmeraum befindlichen Probe ermöglicht wird.

Das Gewichtselement kann aus demselben Material wie die zylindrische Wandung bestehen. Vorzugsweise besteht das Gewichtselement jedoch aus einem anderen Material, insbesondere aus Glas, Keramik, Metall oder einer Legierung.

Die Probenröhrchen werden vorzugsweise derart hergestellt bzw. nach deren Herstellung derart behandelt, dass diese steril und insbesondere frei von Pyrogenen, humaner DNA, RNase und/oder DNase sind.

Die Materialien, aus denen die zylindrische Wandung, die Bodenfläche, der Verschluss sowie das Gewichtselement bestehen sind vorzugsweise nicht cytotoxisch.

Vorzugsweise befindet sich das Gewichtselement initial auf der Bodenfläche, so dass beim Aufnehmen einer Probe in den Aufnahmeraum sich diese zwischen Gewichtselement und Verschluss befindet. In diesem Fall wird vor dem Dispergieren bzw. Homogenisieren das Probenröhrchen gewendet, so dass der Verschluss gegen unten zeigt. Dadurch drückt das Gewichtselement mit seiner Masse auf die Probe.

Vorzugsweise enthält das Probenröhrchen eine Flüssigkeit, insbesondere Wasser oder eine Pufferlösung, welche insbesondere zwischen dem Gewichtselement und dem zweiten Ende angeordnet ist. Die Flüssigkeit ist insbesondere bevorzugt steril.

Die Probe liegt vorzugsweise in fester Form vor. Alternativ kann die Probe jedoch auch als Probenflüssigkeit vorliegen. Sofern es sich bei der Probe um eine Probenflüssigkeit handelt, sind in der Probenflüssigkeit vorzugsweise Zellen suspendiert. Dabei kann es sich bevorzugt um Zellen von Menschen, Tieren, Insekten, Pflanzen oder Pilzen handeln, sowie um Bakterien, Archäen, Protozoen, Hefen oder Chimären. Sofern es sich bei der Probe um eine feste Probe handelt, so ist die Probe vorzugsweise ein Stück Gewebe, insbesondere menschliches oder tierische Gewebe, z.B. aus einer Biopsie. Alternativ kann es sich jedoch bei einer festen Probe auch um ein Mineral, Erde, ein Bestandteil einer Pflanze oder ein Lebensmittel, beispielsweise eine Fleischprobe handeln. Eine feste Probe wird vorzugsweise zusammen mit Wasser oder einer Pufferlösung in den Aufnahmeraum eingebracht.

Die Vorrichtung verfügt vorzugsweise über eine Abdeckung, welche die mindesten eine Aufnahme umgibt. Durch diese Abdeckung kann eine I<ontamination der Umgebungsluft durch Aerosole unterbunden werden. Die Abdeckung weist vorzugsweise eine Klappe oder Türe auf, über welche die mindestens eine Aufnahme für einen Benutzer der Vorrichtung zugänglich wird. Vorzugsweise verfügt die Vorrichtung über eine Sicherung, welche eine Drehbewegung der mindestens einen Aufnahme stoppt, wenn die Klappe oder Tür geöffnet wird. Die Sicherung kann elektronisch oder mechanisch ausgestaltet sein.

Die Drehung des Probenröhrchens ist bevorzugt eine oszillierende Drehbewegung. Das heisst, dass sich die Drehrichtung des Probenröhrchens periodisch ändert. Durch die oszillierende Drehbewegung wird das Probenröhrchen wiederholt beschleunigt und abgebremst, wobei das Gewichtselement wegen seines Trägheitsmoments diesen Bewegungen zeitverzögert folgt. Je nach Trägheitsmoment und Periodizität der Oszillation kann bei gewissen Ausführungsformen die Drehrichtung von Gewichtselement und Probenröhrchen zeitweise gegenläufig sein, was zu einem besonders hohen Eintrag an mechanischer Energie in Form von Scherkräften auf die Probe bedeutet.

In einer alternativen Ausführungsform kann die Drehung des Probenröhrchens auch intermittierend erfolgen. Das heisst, dass das Probenröhrchen stets in dieselbe Richtung dreht, jedoch mit periodischen Beschleunigungs- und Abbremsphasen. Aufgrund des Trägheitsmoments wird das Gewichtselement stets mit einer zum Probenröhrchen unterschiedlichen Geschwindigkeit drehen, womit der Eintrag an mechanischer Energie bzw. an Scherkräften auf die Probe erhöht werden kann.

Der Verschluss weist auf einer Fläche, die zum Aufnahmeraum gewandt ist, wenn der Verschluss mit dem zweiten Ende verbunden ist, eine erste Reibfläche auf. Durch die erste Reibfläche kann der Eintrag an mechanischer Energie auf die Probe zusätzlich erhöht werden.

Die Reibfläche weist eine Oberflächenstruktur auf, welche deren Haftreibung erhöht. Vorzugsweise weist die Reibfläche eine erhöhte Rauheit auf.

Das Gewichtselement liegt vorzugsweise in der Form eines Zylinders vor, die einen kleineren Querschnitt aufweist, als der Querschnitt des Aufnahmeraumes. Die Ausgestaltung des Gewichtselements als Zylinder ermöglicht eine möglichst einfache Ausgestaltung derselben. Der Zylinder weist vorzugsweise eine Dicke auf, die wesentlich kleiner als die Ausdehnung des Aufnahmeraumes entlang der Längsachse ist. Die Dicke des Zylinders beträgt vorzugsweise von 2 mm bis 40 mm.

Vorzugsweise weist das Gewichtselement auf mindestens einer Fläche, die zum ersten oder zweiten Ende gerichtet ist, eine zweite Reibfläche auf. Durch die mindestens eine zweite Reibfläche kann der Eintrag an mechanischer Energie auf die Probe zusätzlich erhöht werden. Sofern das Gewichtselement ein Zylinder ist, ist die zweite Reibfläche auf mindestens einer der Grundflächen des Zylinders angeordnet, besonders bevorzugt jedoch auf beiden Grundflächen.

Vorzugsweise verfügt die erste Reibfläche und allenfalls zweite Reibfläche auf der mindestens einen Fläche des Gewichtselements über Strukturelemente, insbesondere über Zähne, Pyramiden oder Rillen. Durch derartige Strukturelemente lässt sich der Energieeintrag auf die Probe und insbesondere die Erzeugung von Scherkräften erhöhen. Die Strukturelemente sind vorzugsweise in einem regelmässigen Muster auf der ersten Reibfläche und allenfalls auf der zweiten Reibfläche angeordnet.

Bevorzugt sind die Grösse, die Anordnung sowie Geometrie der Strukturelemente der zu dispergierenden bzw. zu homogenisierenden Probe angepasst. Das heisst, dass ja nach Probenart ein anderes Probenröhrchen bereitgestellt wird, welches über entsprechende Strukturelemente verfügt, die eine optimale Dispersion oder Homogenisierung der Probe ermöglichen.

Vorzugsweise besteht das Gewichtselement aus Glas, Edelstahl, Keramik oder eines I<unststoffs. Gewichtselemente aus diesen Materialien lassen sind in grosser Zahl mit relativ wenig Aufwand und kostengünstig herstellen. Zudem weisen insbesondere Glas, Edelstahl und Keramik ein hohes Eigengewicht auf, wodurch die Masse des Gewichtselements besonders hoch ist, was zu einem besonders guten Energieeintrag auf die Probe führt.

Die vorliegende Anmeldung betrifft ferner eine Kombination entsprechend Anspruch 6 aus mindestens einem Probenröhrchen und einer Vorrichtung zum Dispergieren oder Homogenisieren einer Probe. Die Vorrichtung umfasst mindestens eine Aufnahme für ein Probenröhrchen gemäss vorstehender Beschreibung, welche sich mittels eines Antriebs der Vorrichtung in eine Drehbewegung versetzen lässt. Die Drehbewegung ist vorzugsweise eine oszillierende oder intermittierende Drehbewegung.

Die mindestens eine Aufnahme weist vorzugsweise Befestigungsmittel auf, um ein Probenröhrchen darauf lösbar befestigen zu können. Die Befestigungsmittel liegen vorzugsweise als zur Bodenfläche bzw. zum Verschluss des Probenröhrchens komplementär geformte Formschlussmittel vor, so dass ein Probenröhrchen einfach und zuverlässig mit der mindestens einen Aufnahme verbunden werden kann. Die Formschlussmittel können beispielsweise als Schnappverschluss oder Schraubverschluss ausgestaltet sein.

Alternativ kann die mindestens eine Aufnahme jedoch auch über andere Befestigungsmittel verfügen, mit denen ein Probenröhrchen mittels I<raftschluss lösbar mit der Aufnahme verbunden werden kann, beispielsweise mittels Magneten.

Die Vorrichtung verfügt über mindestens eine Aufnahme, vorzugsweise jedoch über mehr als eine Aufnahme, beispielsweise über zwei, drei, vier, fünf, sechs oder mehr Aufnahmen für ein Probenröhrchen.

Der Antrieb für die mindestens eine Aufnahme ist vorzugsweise ein Elektromotor, insbesondere ein Servomotor oder ein Schrittmotor. Dadurch ist eine hohe Dynamik des Antriebs gegeben, so dass auch bei intermittierenden sowie oszillierenden Drehbewegungen schnelle Geschwindigkeits- oder Drehrichtungswechsel sowie eine hohe Beschleunigung möglich sind. Die Drehachse der mindestens einen Aufnahme ist vorzugsweise durch die Achse des Motors gebildet, so dass die Aufnahme direkt durch den Elektromotor angetrieben wird. Alternativ kann der Elektromotor über ein Getriebe auf die Drehachse der mindestens einen Aufnahme einwirken, insbesondere über ein Schnecken- oder Stirnradgetriebe..

Sofern die Vorrichtung über mehr als eine Aufnahme verfügt, so lässt sich vorzugsweise jede der Aufnahmen durch den Antrieb um eine eigene Drehachse in die Drehbewegung versetzen. Vorzugsweise verfügt die Vorrichtung in diesem Fall für jede der Aufnahmen über einen eigenen Antrieb. Alternativ können jedoch auch alle Aufnahmen der Vorrichtung über ein Getriebe mit einem einzigen Antrieb in Drehbewegung versetzt werden. Denkbar ist auch, dass die gesamte Anzahl an Aufnahmen der Vorrichtung in Gruppen aufgeteilt sind, wobei alle Aufnahmen jeder Gruppe jeweils durch einen gemeinsamen Antrieb sowie über ein entsprechendes Getriebe in Drehbewegung versetzt werden.

Die Vorrichtung verfügt vorzugsweise über eine Steuerung, mit welchem sich der Antrieb der mindestens einen Aufnahme ansteuern lässt. Zudem verfügt die Vorrichtung bevorzugt über Eingabemittel, beispielsweise eine Taste, mit der insbesondere ein Benutzer der Vorrichtung die Drehbewegung starten kann. Weiter bevorzugt können die Eingabemittel sowie allenfalls die Steuerung derart ausgestaltet sein, dass ein Benutzer die Art der Drehbewegung sowie Parameter derselben, wie z.B. deren Dauer, Beschleunigung, etc. einstellen kann. Die Vorrichtung verfügt vorzugsweise über Anzeigemittel, wie z.B. eine Flüssigkristallanzeige um einem Benutzer der Vorrichtung Daten anzeigen zu können, beispielsweise Parameter der Drehbewegung, die bereits abgelaufene Dauer der Drehbewegung oder der Status der Vorrichtung. Die Vorrichtung verfügt weiter über einen Anschluss, mit welchem sich die Vorrichtung an eine Stromversorgung anschliessen lässt.

Die Drehbewegung ist vorzugsweise zentrisch. Das heisst, dass das Zentrum der Aufnahme auf deren Drehachse liegt. Alternativ kann die Drehbewegung jedoch exzentrisch sein. Das heisst, dass die mindestens eine Aufnahme derart gelagert ist, dass deren Drehung exzentrisch erfolgt. Durch die exzentrische Drehbewegung können zusätzliche Scherl<räfte auf die Probe ausgeübt werden, womit die Effizienz der Dispersion bzw. der Homogenisierung weiter erhöht werden kann.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Ausführungsform eines erfindungsgemässen Probenröhrchens;
- Fig. 2: den Verschluss des Probenröhrchens aus der Fig. 1 von unten;
- Fig. 3: eine schematische Darstellung einer erfindungsgemässen Vorrichtung zum Dispergieren und Homogenisieren.

Grundsätzlich sind in den Figuren gleiche Teile mit gleichen Bezugszeichen versehen.

### Wege zur Ausführung der Erfindung

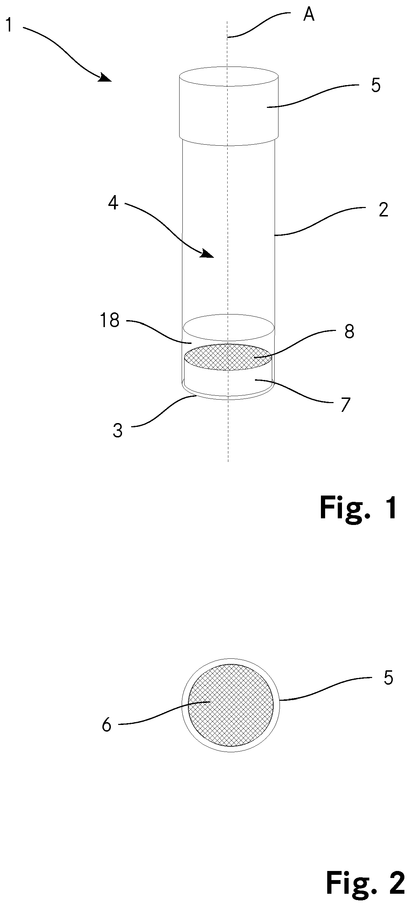

Die Fig. 1 zeigt eine Ausführungsform eines erfindungsgemässen Probenröhrchens 1. Das Probenröhrchen 1 weist eine zylindrische Wandung 2 auf. Ein erstes Ende des Probenröhrchens 1 ist mit einer Bodenfläche 3 verschlossen. Die zylindrische Wandung 2 und die Bodenfläche 3 definieren einen Aufnahmeraum 4, in welches eine Probe aufgenommen werden kann. An einem zweiten Ende, welches dem ersten Ende gegenüberliegt, weist das Probenröhrchen einen Verschluss 5, der beim gezeigten Ausführungsbeispiel ein aufschraubbarer Deckel ist. Innerhalb des Aufnahmeraumes 4 ist ein Gewichtselement 7 aufgenommen. Das Gewichtselement 7 weist eine Form und Grösse auf, welche diesem eine Drehung um die Längsachse A des Aufnahmeraumes 4 ermöglicht, jedoch im Wesentlichen keine weiteren Drehungen um weitere Achsen. Bei der gezeigten Ausführungsform weist das Gewichtselement 7 eine zylindrische Form auf. Eine Verschiebung des Gewichtselements 7 entlang der Längsachse A des Aufnahmeraumes 4 sowie geringfügige Verschiebungen entlang von orthogonal zur Längsachse A stehenden Achsen sind ebenfalls möglich. Im Aufnahmeraum 4 verfügt das Probenröhrchen über eine sterile Flüssigkeit 18, welche sich zwischen dem Gewichtselement 7 und dem zweiten Ende des Probenröhrchens befindet.

Die Fig. 1 zeigt das Probenröhrchen in einem Zustand, bei welchem dieses mit seiner Bodenfläche 3 senkrecht auf einer Oberfläche steht, das heisst dass die Längsachse A parallel zur Wirkrichtung der Schwerkraft ist. Daher liegt das Gewichtselement entsprechend auf der Bodenfläche 3 auf. Das Gewichtselement 7 verfügt auf einer seiner Grundflächen über eine zweite Reibfläche 8 auf.

Die Fig. 2 zeigt den Verschluss 5 in der Form des schraubbaren Deckels der Fig. 1 von unten. Wie zu erkennen ist, weist der Verschluss 5 auf seiner im verschlossenen Zustand gegen den Aufnahmeraum 4 zeigende Seite eine erste Reibfläche 6 auf. Sowohl die erste Reibfläche 6 des Verschlusses wie auch die zweite Reibfläche 8 des Gewichtselements 7 verfügen über Strukturelemente, welche die Rauheit der ersten bzw. zweiten Reibfläche 6, 8 erhöhen.

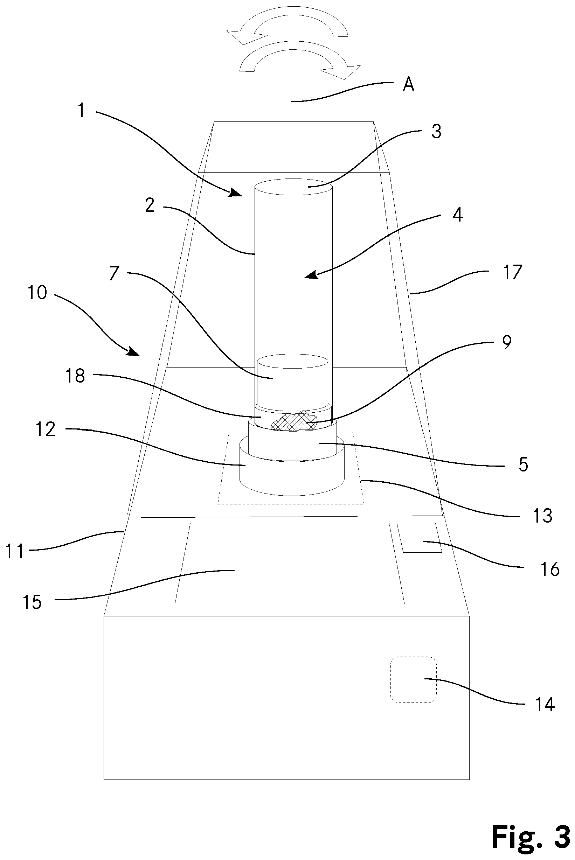

Die Fig. 3 zeigt eine schematische Darstellung einer erfindungsgemässen Vorrichtung 10 zum Dispergieren oder Homogenisieren einer Probe in Kombination mit dem Probenröhrchen 1 gemäss Fig. 1 und Fig. 2.

Die Vorrichtung 10 verfügt über ein Gehäuse 11, auf welchem eine Aufnahme 12 für das Probenröhrchen 1 angeordnet ist. Die Aufnahme 12 ist derart ausgestaltet, dass der Verschluss 5 des Probenröhrchens teilweise in diese eingeführt und über Formschluss mit dieser verbunden wird. Die Aufnahme 12 wird durch einen Antrieb 13 der Vorrichtung 10, welcher sich im Gehäuse 11 befindet und daher nur gestrichelt angedeutet wird, in eine Drehbewegung versetzt. Durch die Drehbewegung der Aufnahme 12 wird das mit dieser verbundene Probenröhrchen 1 ebenfalls in dieselbe Drehbewegung um die Längsachse A des Aufnahmeraumes versetzt.

Im Aufnahmeraum 4 ist eine Probe 9 aufgenommen. In der gezeigten Ausführungsform ist die Probe 9 eine feste Probe, welche sich in der Flüssigkeit 18 des Probenröhrchens 1 befindet. Nach dem Einbringen der Probe 9 in den Aufnahmeraum wird das Probenröhrchen 1 gedreht, damit dieses auf der Aufnahme 12 befestigt werden kann. Dadurch rutscht bzw. fliesst die Probe 9 aufgrund der Schwerkraft auf die zum Aufnahmeraum 4 hin gerichtete Seite des Verschlusses 5. Auch das Gewichtselement 7 wird aufgrund der Schwerkraft entlang der Längsachse A im Aufnahmeraum in Richtung des Verschlusses rutschen. Dadurch wird die Probe 9 zwischen Verschluss 5 und Gewichtselement 7 eingeschlossen.

Die Probe 9 wird aufgrund der Reibung mit dem Verschluss 5 und der zylindrischen Wandung 2 ebenfalls in Drehbewegung versetzt, allerdings aufgrund der Trägheit zeitverzögert relativ zur Drehbewegung des Probenröhrchens 1. Aufgrund der Reibung zwischen der Probe 9 und dem Gewichtselement 7 wird schlussendlich auch das Gewichtselement 7 in Drehung versetzt, jedoch mit zeitlicher Verzögerung gegenüber der Probe 9. Durch diese zeitliche Verzögerung erfolgt die Drehbewegung des Probenröhrchens 1, der Probe 9 sowie des Gewichtselements 7 mit unterschiedlichen Geschwindigkeiten. Dadurch erfolgt ein I<rafteintrag, insbesondere in der Form von Scherkräften, auf die Probe. Nach einiger Zeit gleichen sich die Drehgeschwindigkeiten an. Daher verfügt die Vorrichtung 10 über eine Steuerung 14 (gestrichelt angedeutet), welche innerhalb des Gehäuses 11 angeordnet ist und welche den Antrieb 13 der Aufnahme 12 derart steuert, dass die Drehbewegung intermittierend oder oszillierend ist. Das heisst, dass eine periodische Änderung der Geschwindigkeit bzw. der Drehrichtung eintritt. So kann im Wesentlichen permanent ein Geschwindigkeitsunterschied zwischen den Drehbewegungen des Probenröhrchens 1, die Probe 9 sowie das Gewichtselements 7 aufrechterhalten werden.

Die Vorrichtung 1 verfügt ferner über eine Anzeige 15, auf welcher zum Beispiel Parameter der Drehbewegung der Aufnahme angezeigt werden können, sowie über eine Taste als Eingabemittel 16, mit welcher ein Benutzer den Beginn der Drehbewegung starten kann. Die Vorrichtung 1 umfasst weiter eine Abdeckung 17, welche die mindestens eine Aufnahme 12 umschliesst.

## Patentansprüche

1. Probenröhrchen (1) mit einer zylindrischen Wandung (2) sowie einem ersten Ende und einem zweiten Ende, wobei das erste Ende durch eine Bodenfläche (3) verschlossen ist, so dass ein Aufnahmeraum (4) mit einer Längsachse (A) für eine Probe (9) zwischen Bodenfläche (3) und zylindrischen Wandung (2) gebildet wird, und wobei das zweite Ende einen lösbar mit diesem verbundenen Verschluss (5) aufweist, wobei innerhalb des Aufnahmeraumes (4) ein Gewichtselement (7) aufgenommen ist, welches derart geformt und dimensioniert ist, dass sich das Gewichtselement (7) nur um die Längsachse (A) des Aufnahmeraumes (4) frei in diesem drehen kann, **dadurch gekennzeichnet, dass** der Verschluss (5) auf einer Fläche, die bei mit dem zweiten Ende verbundenen Verschluss (5) zum Aufnahmeraum (4) gewandt ist, eine erste Reibfläche (6) aufweist, wobei die erste Reibfläche (6) eine Oberflächenstruktur aufweist, die deren Haftreibung erhöht.

2. Probenröhrchen (1) nach Anspruch 1, **dadurch gekennzeichnet, dass** das Gewichtselement (7) in der Form eines Zylinders vorliegt, die einen kleineren Querschnitt aufweist, als der Querschnitt des Aufnahmeraumes (4).

3. Probenröhrchen (1) nach einem der Ansprüche 1 oder 2, **dadurch gekennzeichnet, dass** das Gewichtselement (7) auf mindestens einer Fläche, die zum ersten oder zweiten Ende gerichtet ist, eine zweite Reibfläche (8) aufweist.

4. Probenröhrchen (1) nach einem der Ansprüche 1 bis 3, **dadurch gekennzeichnet, dass** die erste Reibfläche (6) und allenfalls zweite Reibfläche (8) auf der mindestens einen Fläche des Gewichtselements (7) über Strukturelemente verfügt, insbesondere über Zähne, Pyramiden oder Rillen.

5. Probenröhrchen (1) nach einem der Ansprüche 1 bis 4, **dadurch gekennzeichnet, dass** das Gewichtselement (7) aus Glas, Edelstahl, I<eramik oder eines Polymers besteht.

6. Kombination einer Vorrichtung (10) zum Dispergieren oder Homogenisieren einer Probe (9) mit mindestens einem Probenröhrchen (1) nach einem der Ansprüche 1 bis 5, wobei die Vorrichtung (10) ein Gehäuse (11) mit mindestens einer Aufnahme (12) für das Probenröhrchen (1) umfasst, welche sich mittels eines Antriebs (13) der Vorrichtung (10) in eine Drehbewegung, insbesondere in eine oszillierende oder intermittierende Drehbewegung versetzen lässt.

7. Kombination nach Anspruch 6, **dadurch gekennzeichnet, dass** die Drehbewegung der mindestens einen Aufnahme (12) zentrisch ist.

8. Verfahren zum Dispergieren oder Homogenisieren einer Probe (9), umfassend die Schritte:
a) Vorlegen eines Probenröhrchens (1) gemäss einem der Ansprüche 1 bis 5;
b) Einbringen der Probe (9) in den Aufnahmeraum (4), so dass die Probe (9) sich zwischen Gewichtselement (7) und erstem oder zweitem Ende befindet;
c) Verbinden des Verschlusses (5) mit dem zweiten Ende;
d) Drehen des Probenröhrchens (1) derart, dass sich die Probe (9) in Richtung der Schwerkraft unterhalb des Gewichtselements (7) befindet;
e) Versetzen des Probenröhrchens (1) in eine Drehbewegung um eine Längsachse (A) des Aufnahmeraumes (4).

9. Verfahren nach Anspruch 8, **dadurch gekennzeichnet, dass** die Drehung des Probenröhrchens (1) eine oszillierende Drehbewegung ist.

10. Verfahren nach Anspruch 8, **dadurch gekennzeichnet, dass** die Drehung des Probenröhrchens (1) intermittierend ausgeführt wird.

## Claims

1. Sample tube (1) with a cylindrical wall (2) and a first end and a second end, the first end being closed by a base (3), such that a receiving space (4) for a sample (9) with a longitudinal axis (A) is formed between the base (3) and the cylindrical wall (2), the second end having a closure piece (5) connected releasably thereto, wherein a weight element (7) is received inside the receiving space (4) and is shaped and dimensioned in such a way that the weight element (7) can rotate freely in the receiving space (4) only about the longitudinal axis (A) of the latter, **characterized in that** the closure piece (5) has a first friction surface (6) on a face which is directed toward the receiving space (4) when the closure piece (5) is connected to the second end, wherein the first friction surface (6) comprises a surface structure that increases its static friction.

2. Sample tube (1) according to Claim 1, **characterized in that** the weight element (7) is in the form a cylinder that has a cross section smaller than the cross section of the receiving space (4).

3. Sample tube (1) according to one of Claims 1 or 2, **characterized in that** the weight element (7) has a second friction surface (8) on at least one face which is directed toward the first or second end.

4. Sample tube (1) according to one of Claims 1 to 3, **characterized in that** the first friction surface (6) and if need be the second friction surface (8) on the at least one face of the weight element (7) comprises structural elements, in particular teeth, pyramids or grooves.

5. Sample tube (1) according to one of Claims 1 to 4, **characterized in that** the weight element (7) is made of glass, stainless steel, ceramic or a polymer.

6. Combination of a device (10) for the dispersion or homogenization of a sample (9) with at least one sample tube (1) according to any one of Claims 1 to 5, wherein the device (10) comprises a housing (11) with at least one receptacle (12) for the sample tube (1), which receptacle (12) is able to be moved in a rotational movement, in particular in an oscillating or intermittent rotational movement, by a drive (13) of the device (10).

7. Combination according to Claim 6, **characterized in that** the rotational movement of the at least one receptacle (12) is centric.

8. Method for the dispersion or homogenization of a sample (9), comprising the steps of:
a) providing a sample tube (1) according to one of Claims 1 to 5;
b) introducing the sample (9) into the receiving space (4), such that the sample (9) is located between the weight element (7) and the first or the second end;
c) connecting the closure piece (5) to the second end;
d) turning the sample tube (1) in such a way that the sample (9) is located below the weight element (7) in the direction of gravity;
e) setting the sample tube (1) in a rotational movement about a longitudinal axis (A) of the receiving space (4).

9. Method according to Claim 8, **characterized in that** the rotation of the sample tube (1) is an oscillating rotational movement.

10. Method according to Claim 8, **characterized in that** the rotation of the sample tube (1) is performed intermittently.

## Revendications

1. Éprouvette (1) avec une paroi cylindrique (2) et une première extrémité et une seconde extrémité, la première extrémité étant fermée par une surface inférieure (3), de sorte qu'une chambre de réception (4) présentant un axe longitudinal (A) pour un échantillon (9) est formée entre la surface inférieure (3) et la paroi cylindrique (2), et la seconde extrémité présentant un bouchon (5) relié de manière amovible à celle-ci, étant logé dans l'espace de réception (4) un élément de poids (7) qui est formé et dimensionné de telle sorte que l'élément de poids (7) ne puisse tourner librement dans cet espace qu'autour de l'axe longitudinal (A) de l'espace de réception (4), **caractérisée en ce que** le bouchon (5) présente une première surface de frottement (6) sur une surface qui, dans le cas où le bouchon (5) est relié à la seconde extrémité, est tournée vers la chambre de réception (4), la première surface de frottement (6) présentant une structure de surface qui augmente son frottement par adhérence.

2. Éprouvette (1) selon la revendication 1, **caractérisée en ce que** l'élément de poids (7) est réalisé sous la forme d'un cylindre ayant une section transversale inférieure à celle de la section transversale de la chambre de réception (4).

3. Éprouvette (1) selon l'une quelconque des revendications 1 ou 2, **caractérisée en ce que** l'élément de poids (7) présente une seconde surface de frottement (8) sur au moins une surface qui est dirigée vers la première ou la seconde extrémité.

4. Éprouvette (1) selon l'une quelconque des revendications 1 à 3, **caractérisée en ce que** la première surface de frottement (6) et dans tous les cas la seconde surface de frottement (8) présentent, sur l'au moins une surface de l'élément de poids (7), des éléments structurels, en particulier des dents, des pyramides ou des rainures.

5. Éprouvette (1) selon l'une quelconque des revendications 1 à 4, **caractérisée en ce que** l'élément de poids (7) est constitué de verre, d'acier inoxydable, de céramique ou d'un polymère.

6. Combinaison d'un dispositif (10) pour disperser ou homogénéiser un échantillon (9) avec au moins un tube à échantillon (1) selon l'une quelconque des revendications 1 à 5, le dispositif (10) comprenant un boîtier (11) avec au moins un logement (12) destiné à l'éprouvette (1), lequel logement peut être mis, au moyen d'une propulsion (13) du dispositif (10), dans un mouvement de rotation, notamment dans un mouvement de rotation oscillant ou intermittent.

7. Combinaison selon la revendication 6, **caractérisée en ce que** le mouvement de rotation de l'au moins un logement (12) est centré.

8. Procédé de dispersion ou d'homogénéisation d'un échantillon (9), comprenant les étapes suivantes :
a) prévision d'une éprouvette (1) selon l'une quelconque des revendications 1 à 5 ;
b) introduction de l'échantillon (9) dans la chambre de réception (4) de sorte que l'échantillon (9) se trouve entre l'élément de poids (7) et la première ou la seconde extrémité ;
c) connexion du bouchon (5) à la seconde extrémité ;
d) mise en rotation de l'éprouvette (1) de manière à ce que l'échantillon (9) se trouve dans le sens de la gravité au-dessous de l'élément de poids (7) ;
(e) mise en rotation de l'éprouvette (1) dans un mouvement de rotation autour d'un axe longitudinal (A) de la chambre de réception (4).

9. Procédé selon la revendication 8, **caractérisé en ce que** la rotation de l'éprouvette (1) est un mouvement de rotation oscillant.

10. Procédé selon la revendication 8, **caractérisé en ce que** la rotation de l'éprouvette (1) est effectuée par intermittence.
